# EUROPEAN PATENT SPECIFICATION

(11) **EP 3 317 074 B1**
(45) Date of publication and mention of the grant of the patent: **19.02.2020**
(21) Application number: 16738960.0
(22) Date of filing: 30.06.2016
(51) Int. Cl.: B29C 45/56, B29C 45/77

(54) **SEQUENTIAL COINING**
SEQUENTIELLES SPRITZPRÄGEN
MATRIÇAGE SÉQUENTIEL

(30) Priority: 30.06.2015 US 201562186722 P
(43) Date of publication of application: 09.05.2018
(73) Proprietor: Imflux Inc., Hamilton, Ohio 45015 (US)
(72) Inventor: HANSON, Herbert, Kenneth, III, Cincinnati, Ohio 45202 (US); HUANG, Chow-chi, Cincinnati, Ohio 45202 (US); ALTONEN, Gene, Michael, Cincinnati, Ohio 45202 (US); BIRCHMEIER, Brandon, Michael, Cincinnati, Ohio 45202 (US); GRAM, Jes, Tougaard, Scottsdale, Arizona 85255 (US)
(74) Representative: Hoyng Rokh Monegier LLP
(86) International application number: PCT/US2016/040248
(87) International publication number: WO 2017/004299

(56) References cited:
- EP-A1- 1 106 326
- WO-A1-02/076713
- WO-A1-2013/137511
- WO-A2-2006/071113
- WO-A2-2008/013456
- WO-A2-2008/033025
- DE-A1- 10 214 008
- JP-A- H0 939 059
- JP-A- H1 016 017
- JP-A- H05 169 477
- JP-A- H08 267 521
- JP-A- 2000 301 583
- US-A- 4 836 960
- US-A1- 2003 001 301

## Description

### TECHNICAL FIELD

This disclosure relates generally to apparatuses and methods for injection molding and, more particularly, to apparatuses and methods for performing injection molding at substantially constant injection pressure while utilizing sequential coining to enhance the quality of injection molded products and product components.

### BACKGROUND

Injection molding is a technology commonly used for high-volume manufacturing of parts made of thermoplastic material. During a repetitive injection molding process, a thermoplastic resin, most often in the form of small beads or pellets, is introduced to an injection molding machine that melts the resin beads under heat and pressure. The now-molten resin is forcefully injected into a mold cavity having a particular cavity shape. The injected plastic is held under pressure in the mold cavity, cooled, and then removed as a solidified part having a shape that essentially duplicates the cavity shape of the mold. The mold itself may have a single cavity or multiple cavities.

An injection molding cycle, as used herein, or simply "cycle", can include the steps of (1) melting a shot of polymeric material; (2) clamping together two (or more) portions of a mold, such as a mold core and a mold cavity plate, that together form the mold walls that define one or more mold cavities (typically while the mold walls are in a cool condition relative to the temperature to which the molten thermoplastic material is heated prior to injection into the mold cavity); (3) injecting molten polymeric material into the one or more mold cavities; (4) coining the molten polymeric material, i.e., filling the one or more mold cavities a pre-determined amount and then fully closing the mold, thereby compressing the molten polymeric material to fully fill the one or more cavities; (5) waiting some period of time until the molded polymeric material cools to a temperature sufficient to eject the part, i.e. a temperature below its melt temperature, so that at least outside surfaces of the molded part are sufficiently solid so that the part will maintain its molded shape once ejected; (6) opening the portions of the mold that define the one or more mold cavities; (7) ejecting the molded part(s) from the one or more mold cavities; and (8) closing the two (or more) mold sections (for a subsequent cycle).

A known drawback of conventional coining, i.e., step (5) of the "cycle," is that it tends to create molded parts that have defects (e.g., cosmetic defects). When the mold is fully closed, the compressed molten thermoplastic material may not flow and fill the one or more mold cavities in the desired manner. For example, the compressed molten thermoplastic material may flow and fill the one or more mold cavities at different rates, thereby filling the one or more mold cavities in an uneven or non-uniform manner. As another example, the compressed molten thermoplastic material may not fully fill certain portions of the one or more mold cavities. These undesirable results are particularly seen when the mold includes one or more flow filling challenges as defined herein. As an example, when the mold includes ribs, bosses, corners, obstacles, or transitions, the molten thermoplastic material, when compressed, may not flow and fill the one or more mold cavities in the desired manner (e.g., may not fully fill parts of one or more of the mold cavities). As such, the molded part may have discontinuities (e.g., in color, texture, opacity) or suffer from other defects or reduced mechanical properties (e.g., sinks, brittleness, weakness, or voids).

WO 2008/013456 A2 discloses a method for manufacturing products using a mold having at least one mold cavity with at least one injection point and at least one flow path which extends from said at least one injection point in the direction of a longitudinal edge-forming part of the mold cavity situated at a relatively large distance from said at least one injection point, in which longitudinal edge-forming part a longitudinal edge of said product is formed, which mold cavity has at least one first movable wall part which is situated in and/or near said longitudinal edge-forming part, wherein said first movable wall part has been or is brought in a first position, wherein a mass is introduced under pressure into the mold cavity, and fills the mold cavity at least in and/or near said longitudinal edge-forming part, after which said at least one first movable wall part is moved in the direction of said opposite first wall part.

In this description, non-SI-units are used. They can be converted into metric units according to MPa = psi x 0,006895.

WO 2006/071113 A2 discloses a method for manufacturing products using a mold having at least one mold cavity which is at least partly defined by at least two movable wall parts, wherein the mold is closed and the at least two movable wall parts are brought to a retracted position relative to the mold cavity, so that the volume of the mold cavity is enlarged relative to the volume required for a product to be formed.

### SUMMARY OF THE INVENTION

While the invention is laid out in the independent claim, further aspects are set forth in the dependent claims, the drawings and the following description.

The present disclosure describes injection molding at substantially constant pressure, and at substantially constant pressure of 41.37 MPa (6000 psi) and lower, while utilizing "sequential coining" to optimize flow front thickness and yet still achieve a desired product finish.

### BRIEF DESCRIPTION OF THE DRAWINGS

While the specification concludes with claims particularly pointing out and distinctly claiming the subject matter that is regarded as the present invention, it is believed that the invention will be more fully understood from the following description taken in conjunction with the accompanying drawings. Some of the figures may have been simplified by the omission of selected elements for the purpose of more clearly showing other elements. Such omissions of elements in some figures are not necessarily indicative of the presence or absence of particular elements in any of the exemplary embodiments, except as may be explicitly delineated in the corresponding written description. None of the drawings are necessarily to scale.
FIG. 1 illustrates a schematic view of a constant pressure injection molding machine constructed according to the disclosure;
FIG. 2A is a cross-sectional view of a mold of an injection molding system of the present disclosure when a mold cavity of the mold is receiving thermoplastic material being injected therein;
FIG. 2B is similar to FIG. 2A, illustrating the walls of the mold core advanced toward the walls of the mold cavity to coin the thermoplastic material in the mold cavity;
FIG. 2C is similar to FIG. 2B, illustrating the thermoplastic material being further coined by an additional coining element;
FIG. 3A is a cross-sectional view of a mold of an injection molding system of the present disclosure when a mold cavity of the mold is receiving thermoplastic material being injected therein;
FIG. 3B is similar to FIG. 3A, illustrating the walls of the mold core advanced toward the walls of the mold cavity to coin the thermoplastic material in the mold cavity;
FIG. 3C is similar to FIG. 3B, illustrating the thermoplastic material being further coined by an additional coining element;
FIG. 4A is a cross-sectional view of a mold of an injection molding system of the present disclosure when a mold cavity of the mold is receiving thermoplastic material being injected therein;
FIG. 4B is similar to FIG. 4A illustrating the walls of the mold core advanced toward the walls of the mold cavity to coin the thermoplastic material in the mold cavity;
FIG. 4C is similar to FIG. 4B, illustrating the thermoplastic material being further coined by a first additional coining element;
FIG. 4D is similar to FIG. 4C, illustrating the thermoplastic material being further coined by a second additional coining element positioned downstream of the first additional coining element;
FIG. 5A illustrates a gate of an injection molding system that is in fluid communication with a mold cavity;
FIG. 5B illustrates the gate of FIG. 5A actuated to a position not in fluid communication with the mold cavity;
FIG. 6A is a cross-sectional view of a mold of an injection molding system of the present disclosure when a coining element in the form of an end gate is in a retracted position adjacent a first wall of a mold cavity and the mold cavity is receiving thermoplastic material being injected therein; and
FIG. 6B is similar to FIG. 6A, illustrating the end gate advanced toward a second wall of the mold cavity to coin the thermoplastic material in the mold cavity and to sever fluid communication between the mold cavity and a nozzle of the injection molding system.

### DETAILED DESCRIPTION OF THE INVENTION

Embodiments of the present invention generally relate to systems, machines, products, and methods of producing products by injection molding and more specifically to systems, products, and methods of producing products by low substantially constant pressure injection molding.

The term "low pressure" as used herein with respect to melt pressure of a thermoplastic material, means melt pressures in a vicinity of a nozzle of an injection molding machine of 41.37 MPa (6000 psi) and lower.

The term "substantially constant pressure" as used herein with respect to a melt pressure of a thermoplastic material, means that deviations from a baseline melt pressure do not produce meaningful changes in physical properties of the thermoplastic material. For example, "substantially constant pressure" includes, but is not limited to, pressure variations for which viscosity of the melted thermoplastic material do not meaningfully change. The term "substantially constant" in this respect includes deviations of approximately 30% from a baseline melt pressure. For example, the term "a substantially constant pressure of approximately 4600 psi" includes pressure fluctuations within the range of about 6000 psi (30% above 4600 psi) to about 3200 psi (30% below 4600 psi). A melt pressure is considered substantially constant as long as the melt pressure fluctuates no more than 30% from the recited pressure.

The term "melt holder", as used herein, refers to the portion of an injection molding machine that contains molten plastic in fluid communication with the machine nozzle. The melt holder is heated, such that a polymer may be prepared and held at a desired temperature. The melt holder is connected to a power source, for example a hydraulic cylinder or electric servo motor, that is in communication with a central control unit, and can be controlled to advance a diaphragm to force molten plastic through the machine nozzle. The molten material then flows through the runner system into the mold cavity. The melt holder may be cylindrical in cross section, or have alternative cross sections that will permit a diaphragm to force polymer under pressures that can range from as low as 100 psi to pressures 40,000 psi or higher through the machine nozzle. The diaphragm may optionally be integrally connected to a reciprocating screw with flights designed to plasticize polymer material prior to injection.

The term "peak flow rate" generally refers to the maximum volumetric flow rate, as measured at the machine nozzle.

The term "peak injection rate" generally refers to the maximum linear speed the injection ram travels in the process of forcing polymer in to the feed system. The ram can be a reciprocating screw such as in the case of a single stage injection system, or a hydraulic ram such as in the case of a two stage injection system.

The term "ram rate" generally refers to the linear speed the injection ram travels in the process of forcing polymer into the feed system.

The term "flow rate" generally refers to the volumetric flow rate of polymer as measured at the machine nozzle. This flow rate can be calculated based on the ram rate and ram cross sectional area, or measured with a suitable sensor located in the machine nozzle.

The term "cavity percent fill" generally refers to the percentage of the cavity that is filled on a volumetric basis. For example, if a cavity is 95% filled, then the total volume of the mold cavity that is filled is 95% of the total volumetric capacity of the mold cavity.

The term "melt temperature" generally refers to the temperature of the polymer that is maintained in the melt holder, and in the material feed system when a hot runner system is used, which keeps the polymer in a molten state. The melt temperature varies by material. However, a desired melt temperature is generally understood to fall within the ranges recommended by the material manufacturer.

The term "gate size" generally refers to the cross sectional area of a gate, which is formed by the intersection of the runner and the mold cavity. For hot runner systems, the gate can be of an open design where there is no positive shut off of the flow of material at the gate, or a closed design where a valve pin is used to mechanically shut off the flow of material through the gate in to the mold cavity (commonly referred to as a valve gate). The gate size refers to the cross sectional area, for example a 1mm gate diameter refers to a cross sectional area of the gate that is equivalent to the cross sectional area of a gate having a 1mm diameter at the point the gate meets the mold cavity. The cross section of the gate may be of any desired shape.

The term "effective gate area" generally refers to a cross sectional area of a gate corresponding to an intersection of the mold cavity and a material flow channel of a feed system (e.g., a runner) feeding thermoplastic to the mold cavity. The gate could be heated or not heated. The gate could be round, or any cross sectional shape, suited to achieve the desired thermoplastic flow into the mold cavity.

The term "intensification ratio" generally refers to the mechanical advantage the injection power source has on the injection ram forcing the molten polymer through the machine nozzle. For hydraulic power sources, it is common that the hydraulic piston will have a 10:1 mechanical advantage over the injection ram. However, the mechanical advantage can range from ratios much lower, such as 2:1, to much higher mechanical advantage ratios, such as 50:1.

The term "peak power" generally refers to the maximum power generated when filling a mold cavity. The peak power may occur at any point in the filling cycle. The peak power is determined by the product of the plastic pressure as measured at the machine nozzle multiplied by the flow rate as measured at the machine nozzle. Power is calculated by the formula P = p ^{∗} Q where p is pressure and Q is volumetric flow rate.

The term "volumetric flow rate" generally refers to the flow rate as measured at the machine nozzle. This flow rate can be calculated based on the ram rate and ram cross sectional area, or measured with a suitable sensor located in the machine nozzle.

The terms "filled" and "full," when used with respect to a mold cavity including thermoplastic material, are interchangeable and both terms mean that thermoplastic material has stopped flowing into the mold cavity.

The term "shot size" generally refers to the volume of polymer to be injected from the melt holder to completely fill the mold cavity or cavities. The shot size is determined based on the temperature and pressure of the polymer in the melt holder just prior to injection. In other words, the shot size is a total volume of molten plastic material that is injected in a stroke of an injection molding ram at a given temperature and pressure. Shot size may include injecting molten plastic material into one or more injection cavities through one or more gates. The shot of molten plastic material may also be prepared and injected by one or more melt holders.

The term "hesitation" generally refers to the point at which the velocity of the flow front is minimized sufficiently to allow a portion of the polymer to drop below its no-flow temperature and begin to freeze off.

The term "electric motor" or "electric press," when used herein, includes both electric servo motors and electric linear motors.

The term "Peak Power Flow Factor" refers to a normalized measure of peak power required by an injection molding system during a single injection molding cycle and the Peak Power Flow Factor may be used to directly compare power requirements of different injection molding systems. The Peak Power Flow Factor is calculated by first determining the peak power, which corresponds to the maximum product of molding pressure multiplied by flow rate during the filling cycle (as defined herein), and then determining the shot size for the mold cavities to be filled. The Peak Power Flow Factor is then calculated by dividing the peak power by the shot size.

The term "low constant pressure injection molding machine" is defined as a class 101 or a class 30 injection molding machine that uses a substantially constant injection pressure that is less than 41.37 MPa (6000 psi). Alternatively, the term "low constant pressure injection molding machine" may be defined as an injection molding machine that uses a substantially constant injection pressure that is less than 41.37 MPa (6000 psi) and that is capable of performing more than 1 million cycles, preferably more than 1.25 million cycles, more preferably more than 2 million cycles, more preferably more than 5 million cycles, and even more preferably more than 10 million cycles before the mold core (which is made up of first and second mold parts that define a mold cavity therebetween) reaches the end of its useful life. Characteristics of "low constant pressure injection molding machines" include mold cavities having an L/T ratio of greater than 100 (and preferably greater than 200), multiple mold cavities (preferably 4 mold cavities, more preferably 16 mold cavities, more preferably 32 mold cavities, more preferably 64 mold cavities, more preferably 128 mold cavities and more preferably 256 mold cavities, or any number of mold cavities between 4 and 512), a heated runner, and a guided ejection mechanism.

The term "useful life" is defined as the expected life of a mold part before failure or scheduled replacement. When used in conjunction with a mold part or a mold core (or any part of the mold that defines the mold cavity), the term "useful life" means the time a mold part or mold core is expected to be in service before quality problems develop in the molded part, before problems develop with the integrity of the mold part (e.g., galling, deformation of parting line, deformation or excessive wear of shut-off surfaces), or before mechanical failure (e.g., fatigue failure or fatigue cracks) occurs in the mold part. Typically, the mold part has reached the end of its "useful life" when the contact surfaces that define the mold cavity must be discarded or replaced. The mold parts may require repair or refurbishment from time to time over the "useful life" of a mold part and this repair or refurbishment does not require the complete replacement of the mold part to achieve acceptable molded part quality and molding efficiency. Furthermore, it is possible for damage to occur to a mold part that is unrelated to the normal operation of the mold part, such as a part not being properly removed from the mold and the mold being force ably closed on the non-ejected part, or an operator using the wrong tool to remove a molded part and damaging a mold component. For this reason, spare mold parts are sometimes used to replace these damaged components prior to them reaching the end of their useful life. Replacing mold parts because of damage does not change the expected useful life.

The term "guided ejection mechanism" is defined as a dynamic part that actuates to physically eject a molded part from the mold cavity.

The term "coating" is defined as a layer of material less than 0.13 mm (0.005 in) in thickness, that is disposed on a surface of a mold part defining the mold cavity, that has a primary function other than defining a shape of the mold cavity (e.g., a function of protecting the material defining the mold cavity, or a function of reducing friction between a molded part and a mold cavity wall to enhance removal of the molded part from the mold cavity).

The term "nominal wall thickness" is defined as the theoretical thickness of a mold cavity if the mold cavity were made to have a uniform thickness. The nominal wall thickness may be approximated by the average wall thickness. The nominal wall thickness may be calculated by integrating length and width of the mold cavity that is filled by an individual gate.

The term "average hardness" is defined as the Rockwell hardness for any material or combination of materials in a desired volume. When more than one material is present, the average hardness is based on a volume weighted percentage of each material. Average hardness calculations include hardnesses for materials that make up any portion of the mold cavity. Average hardness calculations do not include materials that make up coatings, stack plates, gates, or runners, whether integral with a mold cavity or not, and support plates. Generally, average hardness refers to the volume weighted hardness of material in the mold cooling region.

The term "mold cooling region" is defined as a volume of material that lies between the mold cavity surface and an effective cooling surface.

The term "cycle time" is defined as a single iteration of an injection molding process that is required to fully form an injection molded part. Cycle time includes the collective time it takes to perform the steps of advancing molten thermoplastic material into a mold cavity, substantially filling the mold cavity with thermoplastic material, coining the thermoplastic material, cooling the thermoplastic material, separating first and second mold sides to expose the cooled thermoplastic material, removing the thermoplastic material, and closing the first and second mold sides.

The term "skin" or "skin layer" is defined as a surface layer of a molded part. While it is recognized that skin or skin layer can be considered in the context of a molded part's surface aesthetics, which may include the texture or finish of the part, and thus have a depth on the order of only 5% of the wall thickness, when considering the skin layer as it relates to most mechanical properties of a molded part, the skin layer may include the outer 20% of the part.

The term "flow filling challenge" is defined as a region of a part of a mold that forms a feature of a part to be molded which is particularly susceptible to any one or more of a number of problems that complicate the molding of the part or render the molded part more likely to suffer from one or more defects or reduced mechanical properties, such as short-fills, warp, sinks, brittleness, flash, voids, non-fills, weakness (e.g., low tensile, torsional, and/or hoop strength), high stress concentrations, low modulus, reduced resistance to chemical exposure, premature fatigue, non-uniform shrinkage, and discontinuities in color, surface texture, opacity, translucency, or transparency. Non-exhaustive examples of flow filling challenges are: Locations in a mold used to form ribs, bosses, or corners, as well as obstacles in a mold (such as core pins), and transitions (such as a change in thickness of a part to be molded, which may be a sudden stepped change in thickness or a gradual change in thickness, such as a tapered region). These can involve a transition from a relatively thick region to a relatively thin region, and then back to a relatively thick region, and may involve one or more changes in thickness. Another flow filling challenge is the region of a mold cavity used to mold a living hinge, which is typically an integral, relatively thin region of a molded part that permits one portion of the part, such as a flip-top of a cap, to rotate with respect to the rest of the part. As the term flow filling challenge is used herein, it is contemplated that the region of the part affected by a particular challenge may be at a particular position, along a region, or downstream of a particular position or region, and as such, a flow filling challenge need not be limited to a particular location of a change in shape of a mold cavity, but may extend beyond, i.e. downstream of, such a location.

The term "flow front" refers to a leading edge of a shot of molten polymeric material, as experienced by the surfaces of the mold that define a mold cavity, as the molten polymeric material is progressing from a nozzle or gate of the mold cavity (i.e., a point or points of introduction of the molten polymeric material into the mold cavity) toward, and ultimately to, an end-of-fill location of the mold cavity.

The term "rapid heating technique" refers to any manner of increasing the surface temperature of one or more regions of a mold that define any part of a mold cavity, in a short period of time, including resistive heating (or joule heating), conduction, convection, use of heated fluids (e.g., superheated steam or oil in a manifold or jacket, also heat exchangers), radiative heating (such as through the use of infrared radiation from filaments or other emitters), RF heating (or dielectric heating), electromagnetic inductive heating (also referred to herein as induction heating), use of thermoelectric effect (also called the Peltier-Seebeck effect), and use of heat pumps, heat pipes, cartridge heaters, or electrical resistance wires, whether or not their use is considered within the scope of any of the above-listed types of heating.

The term "upstream" refers to a relative location in a mold cavity that a flow front progressing through the mold cavity reaches prior to a given reference location, such that if a flow front of thermoplastic material in a mold cavity reaches location X prior to location Y of the mold cavity as the flow front progresses through the mold cavity, it is said that location X is upstream of location Y. The given reference location may, for example, be a gate, part of the mold (e.g., one of the walls), a coining element (e.g., a core), or a flow location (e.g., end-of-fill location).

The term "downstream" refers to a relative location in a mold cavity that a flow front progressing through the mold cavity reaches after passing a given reference location, such that if a flow front of thermoplastic material in a mold cavity reaches location Z after location Y of the mold cavity as the flow front progresses through the mold cavity, it is said that location Z is downstream of location Y. The given reference location may, for example, be a gate, part of the mold (e.g., one of the walls), a coining element (e.g., a core), or a flow location (e.g., end-of-fill location).

The term "surface area of the mold" refers to the collective area of the surfaces of the mold that together form the mold walls defining one or more mold cavities, to the extent thermoplastic material injected into the mold cavity is exposed to those surfaces in order to form a full molded part.

The term "coining" refers to using a coining or movable element to compress thermoplastic material injected into a mold cavity, effectively reducing the volume of the mold cavity such that the thermoplastic material further fills the mold cavity. The term "coining" may be used interchangeably with stamping, compressive-fill, or hybrid molding.

The term "sequential coining" refers to using multiple coining or movable elements to compress specific areas of thermoplastic material at different points in time while the thermoplastic material is flowing through the mold cavity, such that the thermoplastic material fully and more uniformly fills the mold cavity.

The term "coining element" or "movable element" refers to a physical structure that can be actuated or moved to coin thermoplastic material. A coining element can be configured in various forms, such as, for example, as a portion of one wall of the mold, such as a mold core, an insert operatively coupled to one wall of the mold, one of the gates, or some other movable component suitable for compressing thermoplastic material. In one example, a coining element can be the movable portion of any mechanically actuated gate such as a valve gate or a modified edge gate; in some cases, the gate can simultaneously serve as a coining element and a shutoff element (that moves the mold cavity out of fluid communication with the nozzle). Coining elements can have various shapes and sizes. Part, parts, or all of a coining element can be straight, curved, angled, segmented, or other shapes, or combinations of any of these shapes. Part, parts, or all of a coining element can have any suitable cross-sectional shape, such as circular, oval, square, triangular, or modified versions of these shapes, or other shapes, or combinations of any of these shapes. A coining element can have an overall shape that is tubular, or convex, or concave, along part, parts, or all of a length. A coining element can have any suitable cross-sectional area, any suitable overall width, and any suitable overall length. A coining element can be substantially uniform along part, parts, or all of its length, or can vary, in any way described herein, along part, parts, or all of its length. A coining element can be made of the same material as the mold itself or can be made of a different material. A coining element can be made of steel, aluminum, some other metal, plastic, or any other suitable material.

The temperature of part, parts, or all of a coining element can be controlled with heating and/or cooling according to any embodiments for heating, cooling, or temperature control of mold components, as disclosed herein or as known in the art. When a heated coining element is used, the thermoplastic material at the coining position tends to remain molten (or semi-molten) for a longer time, so solidification of the material can be prevented or delayed. As a result, the coining element can operate through a longer window of time and/or can operate through a wider range of coining depths.

Low constant pressure injection molding machines may also be high productivity injection molding machines (e.g., a class 101 or a class 30 injection molding machine, or an "ultra high productivity molding machine"), such as the high productivity injection molding machine disclosed in U.S. Patent Application US2013/0113131 A1, that may be used to produce thin-walled consumer products, such as toothbrush handles and razor handles. Thin walled parts are generally defined as having a high L/T ratio of 100 or more.

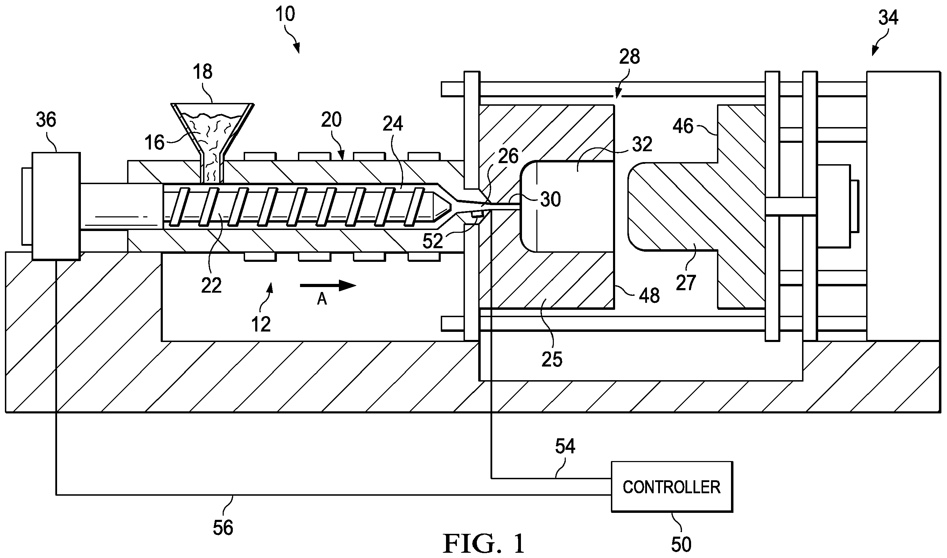

Referring to the figures in detail, FIG. 1 illustrates an exemplary low constant pressure injection molding apparatus 10 that generally includes an injection system 12 and a clamping system 14. A thermoplastic material may be introduced to the injection system 12 in the form of thermoplastic pellets 16. The thermoplastic pellets 16 may be placed into a hopper 18, which feeds the thermoplastic pellets 16 into a heated barrel 20 of the injection system 12. The thermoplastic pellets 16, after being fed into the heated barrel 20, may be driven to the end of the heated barrel 20 by a reciprocating screw 22. The heating of the heated barrel 20 and the compression of the thermoplastic pellets 16 by the reciprocating screw 22 causes the thermoplastic pellets 16 to melt, forming a molten thermoplastic material 24. The molten thermoplastic material is typically processed at a temperature of about 130°C to about 410°C.

The reciprocating screw 22 forces the molten thermoplastic material 24 toward a nozzle 26 to form a shot of thermoplastic material, which will be injected into a mold cavity 32 of a mold 28 via one or more gates 30, preferably three or less gates, that direct the flow of the molten thermoplastic material 24 to the mold cavity 32. In other embodiments the nozzle 26 may be separated from one or more gates 30 by a feed system (not shown). The mold cavity 32 is formed between first and second mold sides 25, 27 of the mold 28 and the first and second mold sides 25, 27 are held together, at a partially closed position, under pressure by a press or clamping unit 34. The press or clamping unit 34 applies a clamping force during the molding process that is greater than the force exerted by the injection pressure acting to separate the two mold halves 25, 27, thereby holding the first and second mold sides 25, 27 together while the molten thermoplastic material 24 is injected into the mold cavity 32. To support these clamping forces, the clamping system 14 may include a mold frame and a mold base.

Once the shot of molten thermoplastic material 24 is injected into the mold cavity 32, the reciprocating screw 22 stops traveling forward. The molten thermoplastic material 24 takes the form of the mold cavity 32 as the material fills the mold cavity 32.

Typically, in a conventional injection molding cycle that includes a coining step, the molten thermoplastic material 24 is coined by advancing a movable element, such as the mold core, toward the opposing wall of the mold cavity 32, once the mold cavity 32 reaches a pre-determined percent cavity fill (e.g., 85%). In the example illustrated in FIG. 1, the wall 46 of the second mold side 27 is advanced toward the wall 48 of the first mold side 25 (which is stationary in this example). Instead, the wall 48 of the first mold side 25 may be moved toward the stationary wall 46 of the second mold side 27. In any event, reducing the size of the mold cavity 32 in this manner displaces the molten thermoplastic material 24 that had been injected into the mold cavity 32 prior to actuation of the wall 46 (or 48), compressing, or coining, the molten thermoplastic material 24 in the mold cavity 32, causing the molten thermoplastic material 24 to redistribute itself in the reduced volume of the mold cavity 32.

However, because conventional coining is prone to creating molded parts that have various defects, the injection molding cycle of the present disclosure includes a coining operation designed to reduce, if not eliminate, the defects created by conventional coining. The coining operation utilized in the present disclosure can be referred to as "sequential coining," whereby multiple coining sites are used to coin specific areas within the mold cavity 32. Thus, in addition to the primary coining element, in this case the wall 46 of the second mold side 27, provided in conventional injection molding cycles, the mold 28 includes at least one additional coining or movable element. In some cases, the mold 28 of the present disclosure includes one additional coining element, while in other cases the mold 28 includes two, three, four, or any other number of additional coining elements. The additional coining element(s) may be actuated along one or more axes that are parallel to the axis along which the second mold side 27 moves, that are perpendicular to the axis along which the second mold side 27 moves, that are angled in some other way relative to the axis along which the second mold side 27 moves, or combinations thereof.

Generally speaking, the material 24 is first, or primarily, coined by actuating the wall 46 of the second mold side 27 toward the wall 48 of the first mold side 25 at a first point in time. Once the wall 46 has been advanced toward the wall 48, there remains a space or gap between the wall 46 of the first mold side 25 and the wall 48 of the second mold side 27. This gap or space may be, for example, .1 mm, .2 mm, .3 mm, .4 mm, .5 mm, .6 mm, .7 mm, .8 mm, .9 mm, 1 mm, 1.1 mm, 1.2 mm, 1.3 mm, 1.4 mm, 1.5 mm, 1.6 mm, 1.7 mm, 1.8 mm, 1.9 mm, 2 mm, 2.1 mm, 2.2 mm, 2.3 mm, 2.4 mm, 2.5 mm, 2.6 mm, 2.7 mm, 2.8 mm, 2.9 mm, 3 mm, 3.1 mm, 3.2 mm, 3.3 mm, 3.4 mm, 3.5 mm, 3.6 mm, 3.7 mm, 3.8 mm, 3.9 mm, 4 mm, any integer or fraction of an integer between .1 mm and 41 mm, or some other value, and the gap or space may vary along the length of the mold cavity, such as in mold cavities used to produce parts having stepped and/or tapered thicknesses. The ratio of this gap or space (i.e., the distance separating the wall 46 and the wall 48) to the pre-coined gap or space (i.e., the distance between the wall 46 and the wall 48 before the material 24 is coined) may vary. For example, the ratio can be less than 1, less than .9, less than .8, less than .7, less than .5, less than .4, less than .3, less than .2, less than .1, or any fraction between 0 and 1. The first point in time often corresponds, but need not correspond, to the time at which the mold cavity 32 reaches the pre-determined percent cavity fill. For example, the first point in time can correspond to the time at which the mold cavity 32 is 50%, 55%, 60%, 65%, 70%, 75%, 80%, 85%, 90%, 91%, 92%, 93%, 94%, 95%, 96%, 97%, 98%, or 99% filled or any integer or fraction of an integer between those percentages or between 99% and 100%.

The material 24 is subsequently further coined by actuating the additional movable element(s), either at pre-determined points in time or in response to data, as will be described below. The additional movable element(s) may be actuated toward an opposing wall of the mold 28 or away from an opposing wall of the mold 28, depending upon the structure of the mold 28. When one or more additional movable elements are actuated toward an opposing wall of the mold 28, these additional movable elements may be actuated to a distance of .1 mm, .2 mm, .3 mm, .4 mm, .5 mm, .6 mm, .7 mm, .8 mm, .9 mm, 1 mm, 1.1 mm, 1.2 mm, 1.3 mm, 1.4 mm, 1.5 mm, 1.6 mm, 1.7 mm, 1.8 mm, 1.9 mm, 2 mm, 2.1 mm, 2.2 mm, 2.3 mm, 2.4 mm, 2.5 mm, 2.6 mm, 2.7 mm, 2.8 mm, 2.9 mm, 3 mm, 3.1 mm, 3.2 mm, 3.3 mm, 3.4 mm, 3.5 mm, 3.6 mm, 3.7 mm, 3.8 mm, 3.9 mm, 4 mm, any integer or fraction of an integer between .1 mm and 4 mm, or some other distance, from the opposing wall of the mold 28.

In some cases, actuating the additional movable element(s) may, in turn, move one or more of the gates 30 out of fluid communication with the nozzle 26, thereby preventing any further material 24 from flowing into the mold cavity 32.

In cases in which the mold 28 includes only one additional coining element, the material 24 can be secondarily coined by actuating this additional coining element to a different position at a second point in time later than the first point in time. The second point in time may occur while the second mold side 27 is actuating or after the second mold side 27 has been actuated. The additional coining element can be actuated along an axis that is parallel to the axis along which the second mold side 27 moves, perpendicular to the axis along which the second mold side 27 moves, or angled in some other way relative to the axis along which the second mold side 27 moves. The axis along which the additional coining element can move may be parallel, perpendicular, or otherwise angled relative to a parting line between the first and second mold parts 25, 27.

It will be appreciated that the material 24 can be coined any number of additional times by further actuating the wall 46 of the second mold side 27 to one or more different positions, for example closer toward the wall 48 of the first mold side 25 (thereby shrinking the space between the wall 46 and the wall 48), and/or further actuating the additional coining element to one or more different positions. The additional coining can occur at one time (e.g., at a third point in time) or at different points in time (e.g., at a third point in time, at a fourth point in time, and so on), with the timing of this additional coining being variable relative to the first and second points in time. For example, additional coining can occur at a third point in time that occurs at a point in time after the first point in time and one of before the second point in time, after the second point in time, and while the one additional coining element is actuated.

In cases in which the mold 28 includes multiple additional coining elements, the material 24 can be coined multiple additional times (in addition to the primary coining) by actuating these additional coining elements to various positions. The additional coining elements can be actuated at a second point in time (i.e., at the same time) later than the first point in time or at different points in time (e.g., at a second point in time, at a third point in time, and so on) later than the first point in time, with the specific timing of these different points in time being variable relative to the first point in time and one another. For example, a first additional coining element can be actuated to a different position at a second point in time later than the first point in time, and a second additional coining element can be actuated to a different position at a third point in time, the third point in time being later than the first point in time and before the second point in time, after the second point in time, or while the first additional coining element is being actuated. The additional coining elements can be actuated along axes that are parallel to the axis along which the second mold side 27 moves, perpendicular to the axis along which the second mold side 27 moves, angled in some other way relative to the axis along which the second mold side 27 moves, or combinations thereof. Each of these axes can be parallel, perpendicular, or otherwise angled relative to a parting line between the first and second mold parts 25, 27.

As noted above, it will be appreciated that the material 24 can be coined any number of additional times by further actuating the wall 46 of the second mold side 27 to one or more different positions, for example closer toward the wall 48 of the first mold side 25 (thereby shrinking the space between the wall 46 and the wall 48), and/or further actuating the additional coining element to one or more different positions. The additional coining can occur at one time (e.g., at a fourth point in time) or at different points in time (e.g., at a fourth point in time, at a fifth point in time, and so on), with the timing of this additional coining being variable relative to the first point in time and the other points in time.

The molten thermoplastic material 24 cools inside the mold 28 until the thermoplastic material 24 solidifies. Once the thermoplastic material 24 has solidified, the press 34 releases the first and second mold sides 25, 27, the first and second mold sides 25, 27 are separated from one another, and the finished part may be ejected from the mold 28. The mold 28 may include a plurality of mold cavities 32 to increase overall production rates. The shapes of the cavities of the plurality of mold cavities may be identical, similar or different from each other. (The latter may be considered a family of mold cavities).

A controller 50 is communicatively connected with a sensor 52, located in the vicinity of the nozzle 26, and a screw control 36. The controller 50 may include a microprocessor, a memory, and one or more communication links. The controller 50 may also be optionally connected to a sensor 53 located proximate an end of the mold cavity 32. This sensor 52 may provide an indication of when the thermoplastic material is approaching the end of fill in the mold cavity 32. The sensor 52 may sense the presence of thermoplastic material optically, pneumatically, mechanically, electromechanically, or by otherwise sensing pressure and/or temperature of the thermoplastic material. When pressure or temperature of the thermoplastic material is measured by the sensor 52, this sensor 52 may send a signal indicative of the pressure or the temperature to the controller 50 to provide a target pressure for the controller 50 to maintain in the mold cavity 32 (or in the nozzle 26) as the fill is completed. This signal may generally be used to control the molding process, such that variations in material viscosity, mold temperatures, melt temperatures, and other variations influencing filling rate, are adjusted by the controller 50. These adjustments may be made immediately during the molding cycle, or corrections can be made in subsequent cycles. Furthermore, several signals may be averaged over a number of cycles and then used to make adjustments to the molding process by the controller 50. The controller 50 may be connected to the sensor 52, and/or the sensor 53, and the screw control 36 via wired connections 54, 56, respectively. In other embodiments, the controller 50 may be connected to the sensors 52, 53 and screw control 56 via a wireless connection, a mechanical connection, a hydraulic connection, a pneumatic connection, or any other type of communication connection known to those having ordinary skill in the art that will allow the controller 50 to communicate with both the sensors 52, 53 and the screw control 36.

In the embodiment of FIG. 1, the sensor 52 is a pressure sensor that measures (directly or indirectly) melt pressure of the molten thermoplastic material 24 in vicinity of the nozzle 26. The sensor 52 generates an electrical signal that is transmitted to the controller 50. The controller 50 then commands the screw control 36 to advance the screw 22 at a rate that maintains a desired melt pressure of the molten thermoplastic material 24 in the nozzle 26. While the sensor 52 may directly measure the melt pressure, the sensor 52 may also indirectly measure the melt pressure by measuring other characteristics of the molten thermoplastic material 24, such as temperature, viscosity, flow rate, etc., which are indicative of melt pressure. Likewise, the sensor 52 need not be located directly in the nozzle 26, but rather the sensor 52 may be located at any location within the injection system 12 or mold 28 that is fluidly connected with the nozzle 26. If the sensor 52 is not located within the nozzle 26, appropriate correction factors may be applied to the measured characteristic to calculate an estimate of the melt pressure in the nozzle 26. The sensor 52 need not be in direct contact with the injected fluid and may alternatively be in dynamic communication with the fluid and able to sense the pressure of the fluid and/or other fluid characteristics. In yet other embodiments, the sensor 52 need not be disposed at a location that is fluidly connected with the nozzle. Rather, the sensor 52 could measure clamping force generated by the clamping system 14 at a mold parting line between the first and second mold parts 25, 27. In one aspect the controller 50 may maintain the pressure according to the input from sensor 52. Alternatively, the sensor 52 could measure an electrical power demand by an electric press, which may be used to calculate an estimate of the pressure in the nozzle.

In a substantially constant pressure injection molding system, the location of the flow front of the molten polymeric material can be detected at desired locations with the mold cavity 32. As described above, the fact that the flow front has reached a particular location in the mold cavity 32 may be detected by a sensor 52 or 53. For instance, the sensor 52 may take the form of a pressure transducer, and may use vacuum pressure. One or more temperature sensors, such as thermal resistors, could be used instead of or in addition to a pressure sensor to determine or verify that the flow front has reached a given location of a mold cavity 32. Such a sensor 52 or 53 may operate by either sensing temperature or pressure, or by sensing a lack thereof. For instance, the sensor could sense a flow of air, and upon interruption, the sensor 52 or 53 may detect that interruption and communicate to the controller 50 that the air flow has been interrupted. Alternatively or additionally, the location of the flow front may be determined based on time, screw position (e.g., monitored using a potentiometer), hydraulic pressure, the velocity of the flow front, or some other process characteristic. As an example, the location of the flow front can be determined by monitoring the screw position, which when analyzed over time, can be used to calculate the volume of thermoplastic material in the mold 28.

While not illustrated in FIG. 1, the controller 50 can also be connected to the second mold side 27 of the mold 28 (or, in other examples, the first mold side 25) and/or one or more of the additional coining elements (or the additional coining element, when the mold 28 only includes one). The controller 50 may be connected via a wired connection (e.g., wired connection 54), a wireless connection, a mechanical connection, a hydraulic connection, a pneumatic connection, or any other type of communication connection that will allow the controller 50 to communicate with the second mold side 27 and/or the one or more additional coining elements (or the additional coining element). So connected, the controller 50 can control the position of the second mold side 27 and/or the one or more additional coining elements.

More specifically, the controller 50 can send a signal indicative of an instruction to the second mold side 27 and/or the one or more additional coining elements to move to a desired position (e.g., toward one of the walls 46, 48). The controller 50 can send such an instruction at a pre-determined point in time during the injection cycle or at a time determined based upon data obtained by the sensor 52 and/or the sensor 53. For example, the controller 50 can send such an instruction based upon data indicative of the flow front of the material 24 approaching end-of-fill, data indicative of the flow front of the material 24 reaching some pre-determined location short of the end-of-fill, such as a location indicative of the flow front having reached a position representing coverage of 50%, 55%, 60%, 65%, 70%, 75%, 80%, 85%, 90%, 91%, 92%, 93%, 94%, 95%, 96%, 97%, 98%, or 99% of the surface area of the mold by thermoplastic material, or any integer or fraction of an integer between those percentages or between 99% and 100%, and/or data indicative of the pressure, temperature, flow rate, viscosity, and/or one or more other characteristics of the material 24.

Although an active, closed loop controller 50 is illustrated in FIG. 1, other pressure regulating devices may be used instead of the closed loop controller 50. For example, a pressure regulating valve (not shown) or a pressure relief valve (not shown) may replace the controller 50 to regulate the melt pressure of the molten thermoplastic material 24. More specifically, the pressure regulating valve and pressure relief valve can prevent overpressurization of the mold 28. Another alternative mechanism for preventing overpressurization of the mold 28 is an alarm that is activated when an overpressurization condition is detected.

The injection molding system of the present disclosure not only provides the benefits of injection molding at substantially constant pressure, and at substantially constant pressure of 41.37 MPa (6000 psi) and lower, those benefits being described in US Patent Appl. No. US2012/0294963 A1, but also provides a number of additional benefits by utilizing "sequential coining" as described herein. Specifically, "sequential coining" delivers a better flow front, by, for example, promoting a more uniform filling of the mold 28, reducing the required amount of compression for the material 24, and optimizing cooling and/or heating timing with flow front position. "Sequential coining" also enables selective thinwalling of very thin parts (e.g., parts having portions with a thickness of less than 1 mm). The injection molding system of the present disclosure can thus deliver molded articles that have an optimal flow front thickness and have the desired finish, but are substantially free of the defects, such as cosmetic and mechanical defects, seen in injection molding cycles that utilize conventional coining. Moreover, these benefits are achieved without the need for further time-consuming and labor-intensive post-processing operations. By avoiding such post-processing, the strength, durability, and longevity of molded parts is also enhanced, since sequential coining induces less residual stresses into molded parts than post-processing operations that would otherwise be necessary to achieve the finishes of thin-walled parts.

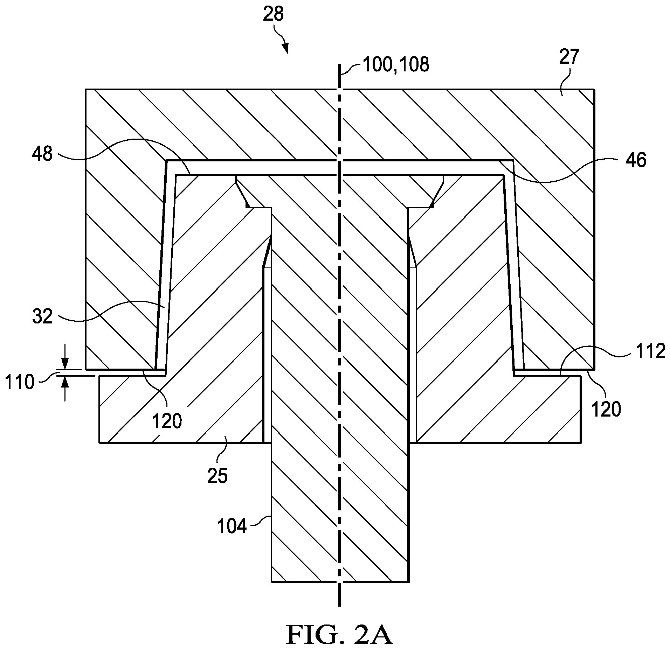

FIGS. 2A-2C illustrate one example of how "sequential coining" can be implemented in a mold 28 of an injection molding apparatus 10. The mold 28 includes a mold cavity 32 formed or defined between first and second sides 25, 27 of the mold 28. In this example, the second side 27 of the mold 28 is fixed (i.e., does not move), while the first side 25 of the mold 28 is movable toward or away from the second side 27 of the mold 28 along an axis 100 to close or open the mold cavity 32. The mold 28 also includes a movable or coining element 104 formed or disposed in the first side 25. The element 104, which is movable relative to the first side 25, is movable toward or away from the second side 27 along an axis 108. More specifically, the element 104 is movable toward or away from a corresponding or counterpart wall 46 of the second side 27 along the axis 108. In this example, the axis 108 is co-axial with the axis 100 (i.e., the first side 25 and the element 104 move along the same axis) and is perpendicular to a parting line between the first and second sides 25, 27, though this need not be the case, as will be described in other examples below.

FIG. 2A illustrates the mold cavity 32 in a pre-coined state. In this state, there exists a gap or space 110 between the wall 112 of the first side 25 and the wall 120 the second side 27. It will be appreciated that the gap 110 allows molten thermoplastic material 24 to be injected into, flow through, and fill, the mold cavity 32.

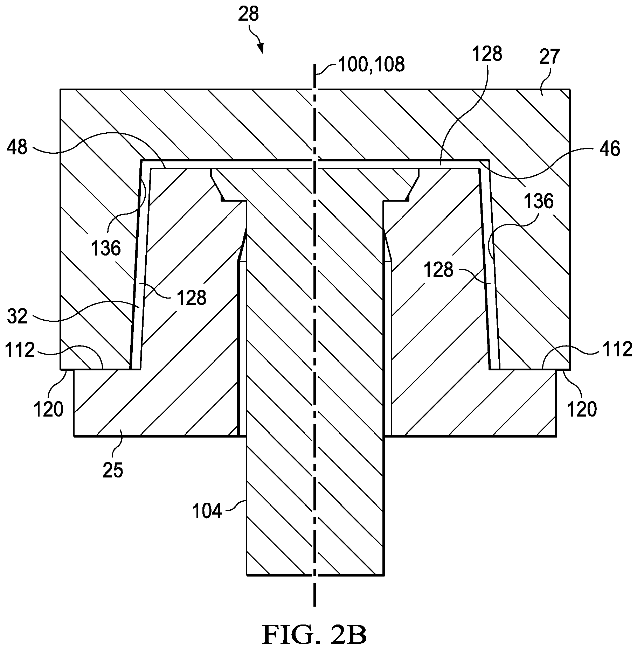

At the desired time (e.g., once the thermoplastic material 24 reaches a pre-determined percent cavity fill), the thermoplastic material 24 can be primarily coined by advancing the wall 112 toward the wall 120 of the mold cavity 32. This is done by actuating the first side 25 and the element 104 (at least in this example) from the position shown in FIG. 2A to the position shown in FIG. 2B. More specifically, the first side 25 and the element 104 are actuated toward the second side 27 along the axes 100, 108 until the wall 112 of the first side 25 abuts or contacts the wall 120 of the second side 27. Doing so eliminates, or at least reduces, the gap 110 illustrated in FIG. 2A. Reducing the size of the mold cavity 32 in this manner primarily coins, or compresses, the molten thermoplastic material 24 in the mold cavity 32, causing the material 24 to substantially fill the cavity 32.

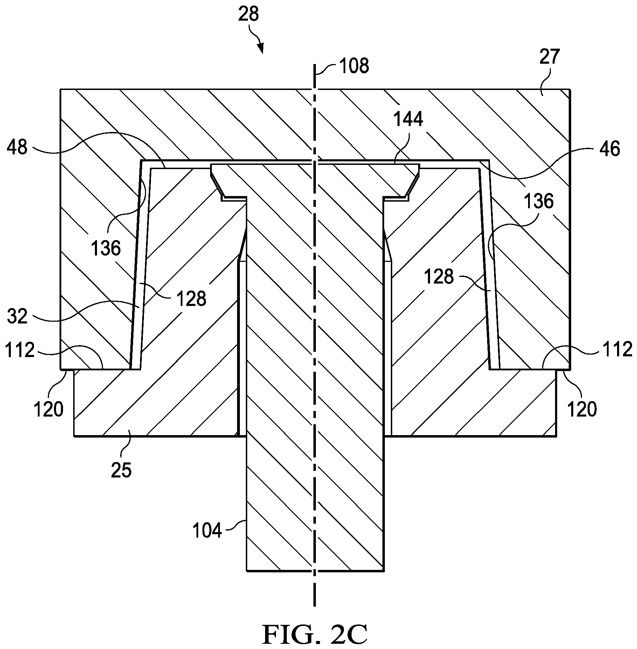

At a subsequent desired time (e.g., when the flow front of the material 24 has reached a pre-determined location), the thermoplastic material 24 can be secondarily coined by actuating the element 104 from the position shown in FIG. 2B to the position shown in FIG. 2C. More specifically, the element 104 is actuated, relative to the first side 25, further toward the second side 27 along the axis 108 until the end surface 144 of the element 104 reaches the desired position (e.g., contacts the flowing material 24 at the desired location). Actuation of the element 104 in this manner further reduces the thickness of a portion of the mold cavity 32, namely the portion between the wall 46 of the second side 27 and the end surface 144, while leaving unchanged the thickness of the remainder of the mold cavity 32. As a result, the mold cavity 32 has a first thickness (e.g., 1 mm) and a second thickness (e.g., .6 mm) that is smaller than the first thickness, the first thickness corresponding to the thickness of the portion of the cavity 32 not located between the wall 46 and the end surface 144, and the second thickness corresponding to the thickness of the portion of the cavity 32 that is located between the wall 46 and the end surface 144. It will be appreciated that the thickness of the portion of the cavity 32 located between the wall 46 and the end surface 144 can be adjusted by moving the element 104 closer to or further from the wall 46 of the second side 27. In any event, secondarily coining the material 24 in the described manner coins, or compresses, molten thermoplastic material 24 adjacent or proximate to the end surface 144 of the element 104, causing the adjacent material 24 to fully and uniformly fill the mold cavity 32.

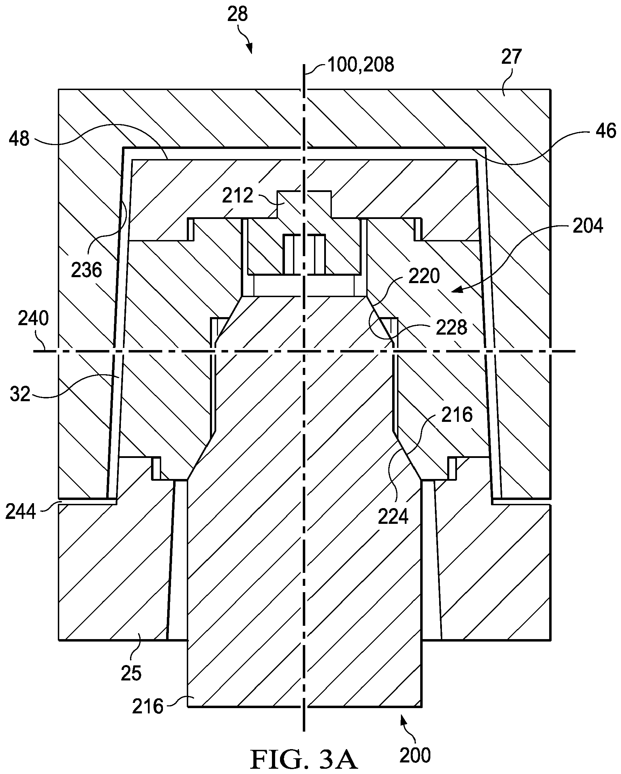

FIGS. 3A-3C illustrate another example of how "sequential coining" can be implemented in a mold 28 of an injection molding apparatus 10. The mold 28 is similar to the mold 28 described in connection with FIGS. 2A-2C, with common components depicted using common reference numerals. Here, however, the mold 28 includes two movable or coining elements 200 and 204 each formed or disposed in, but movable relative to, the first side 25. The first movable element 200 includes a first portion 212 that is telescopically disposed within a second portion 216. The first portion 212 is fixedly disposed in the first side 25, with the second portion 216 being movable relative to the first portion 212 toward or away from the wall 46 of the second side 27 along an axis 208. In this example, the axis 208 is parallel to the axis 100 but is perpendicular to a parting line between the first and second sides 25, 27. The second portion 216 is defined, in relevant part, by a pair of curved surfaces 216, 220. The second movable element 204 circumscribes a portion of the first movable element 200 and includes a pair of curved surfaces 224, 228 that are structured and arranged to engage the curved surfaces 216, 220, respectively, of the first movable element 200. When the first element 200 is actuated relative to the first side 25, and the second portion 216 moves relative to the first portion 212, movement of the surfaces 216, 220 causes the second element 204 to move toward or away from a corresponding or counterpart wall 236 of the second side 27 along an axis 240. More specifically, when the first element 200 is actuated toward the first side 25, the resulting upward movement of the surfaces 216, 220 relative to the surfaces 224, 228 drives the second element 204 outward, or toward the wall 236 of the second side 27, along the axis 240. Conversely, when the first element 200 is actuated away from the first side 25, the resulting downward movement of the surfaces 216, 220 relative to the surfaces 224, 228 causes the second element 204 to move inward, or away from the wall 236, along the axis 240. In this example, the axis 240 is perpendicular to the axis 208 and parallel to the parting line between the first and second sides 25, 27.

FIG. 3A illustrates the mold cavity 32 in a pre-coined state. In this state, there exists a gap or space 244 between the wall 248 of the first side 25 and the wall 252 of the second side 27. It will be appreciated that the gap 244 allows molten thermoplastic material 24 to be injected into, flow through, and fill the mold cavity 32.

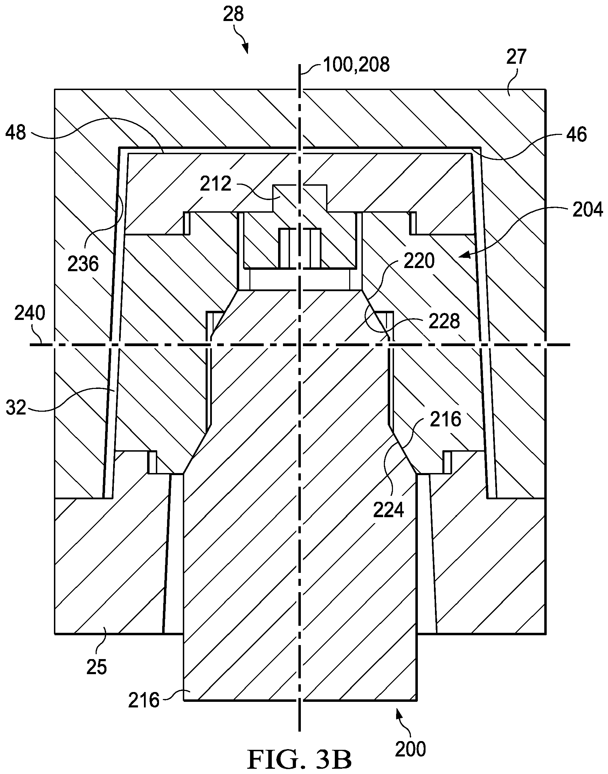

At the desired time, (e.g., once the thermoplastic material 24 reaches a pre-determined percent cavity fill), the thermoplastic material 24 can be primarily coined by actuating the first side 25 and the elements 200 and 204 (at least in this example) to move from the position shown in FIG. 3A to the position shown in FIG. 3B. More specifically, the first side 25 and the elements 200 and 204 are advanced toward the second side 27 along the axes 200, 208 until the wall 248 of the first side 25 abut or contact the wall 252 of the second side 27. Doing so eliminates, or at least reduces, the gap 244 illustrated in FIG. 3A. Reducing the size of the mold cavity 32 in this manner primarily coins, or compresses, the molten thermoplastic material 24 in the mold cavity 32, causing the material 24 to substantially fill the mold cavity 32.

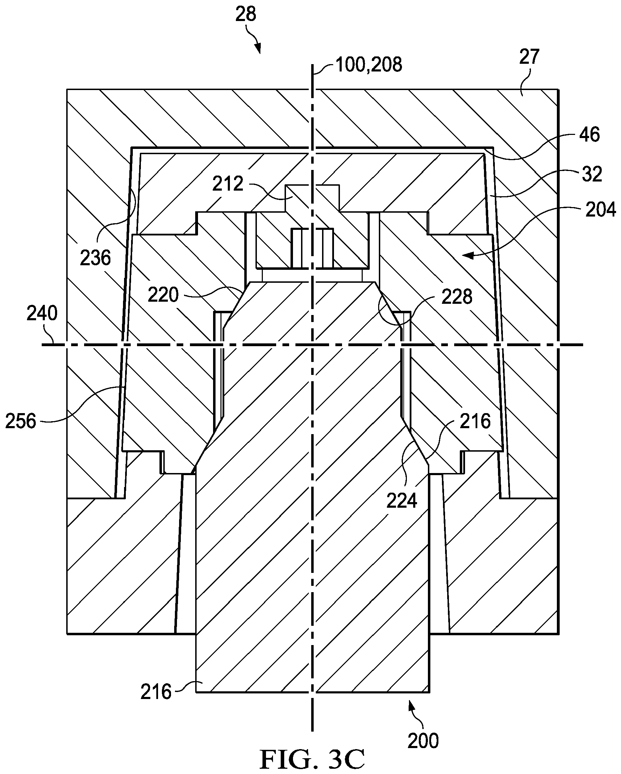

At a subsequent desired time (e.g., when the flow front of the material 24 has reached a pre-determined location), the thermoplastic material 24 can be secondarily coined by actuating the elements 200 and 204 from the position shown in FIG. 3B to the position shown in FIG. 3C. More specifically, the second portion 216 of the element 200 is actuated toward the first portion 212 of the element 200 along the axis 208. This, in turn, drives the second element 204, and more particularly a wall 256 of the element 204, toward the wall 236 of the second side 27 along the axis 240. Any suitable means of actuation, such as a geometric relationship of parts, camming, rack-and-pinion, or geared relationship can be employed to achieve this reaction or driving of the wall 256 of the second element 204. Actuation of the element 204 in this manner reduces the thickness of a portion of the cavity 32, namely the portion between the wall 236 of the second side 27 and the 256, while leaving unchanged the thickness of the remainder of the cavity 32. As a result, the mold cavity 32 has a first thickness (e.g., 1 mm) and a second thickness (e.g., .6 mm) that is smaller than the first thickness, the first thickness corresponding to the thickness of the portion of the cavity 32 not located between the wall 236 and the wall 256, and the second thickness corresponding to the thickness of the portion of the cavity 32 that is located between the wall 236 and the wall 256. It will be appreciated that the thickness of the portion of the cavity 32 located between the wall 46 and the end surface 144 can be adjusted by moving the element 104 closer to or further from the wall 46 of the second side 27. In any event, secondarily coining the material 24 in the described manner coins, or compresses, molten thermoplastic material 24 adjacent or proximate to the wall 256 144 of the element 204, causing the adjacent material 24 to fully and more uniformly fill the mold cavity 32.

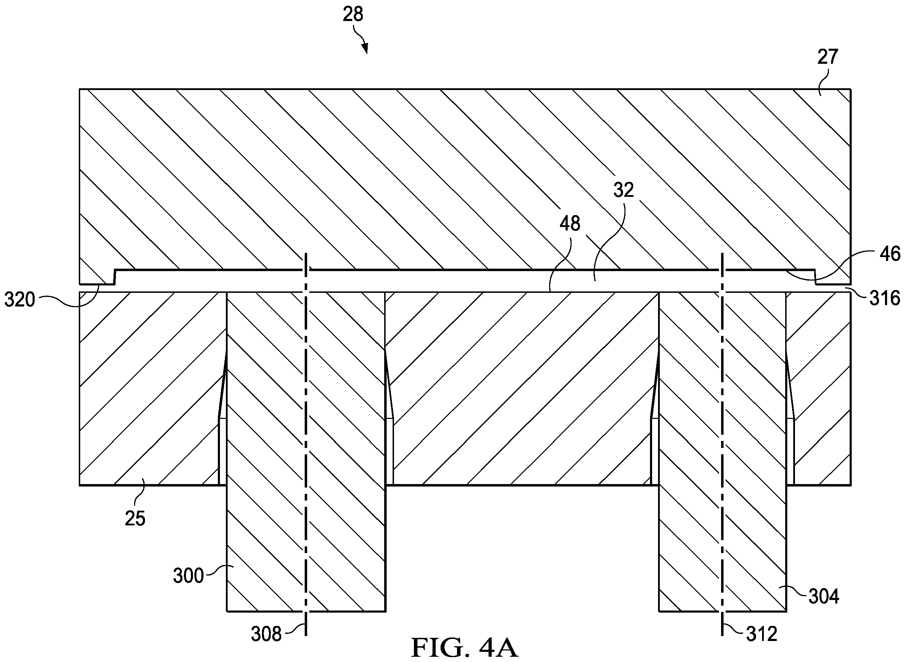

FIGS. 4A-4D illustrate yet another example of how "sequential coining" can be implemented in a mold 28 of an injection molding apparatus 10. The mold 28 is similar to the mold 28 described in connection with FIGS. 2A-2C, with common components depicted using common reference numerals. Here, however, the mold 28 includes two movable or coining elements 300 and 304 formed or disposed in the first side 25. The elements 300 and 304 are illustrated similar in shape, with the element 300 being slightly larger than the element 304, though the elements 300 and 304 could be of different shapes than one another. The element 300. In this example, the element 304 is positioned downstream of the element 300 within the mold 28, though this need not be the case (e.g., the element 304 can be upstream of the element 300).

The elements 300 and 304 are movable relative to the first side 25 (as well as movable relative to one another). The element 300 is movable toward or away from the second side 27 along an axis 308. More specifically, the element 300 is movable toward or away from a corresponding or counterpart wall 46 of the second side 27 along the axis 308. The element 304 is also movable toward or away from the second side 27, but along an axis 312. More specifically, the element 304 is movable toward or away from the wall 46 of the second side 27 along the axis 312. In this example, the axes 308 and 312 are parallel to the axis 100 and to one another, but are perpendicular to a parting line between the first and second sides 25, 27.

FIG. 4A illustrates the mold cavity 32 in a pre-coined) state. In this state, there exists a gap or space 316 between the wall 320 of the first side 25 and the wall 48 of the second side 27. It will be appreciated that the gap 316 allows molten thermoplastic material 24 to be injected into, flow though, and fill the mold cavity 32.

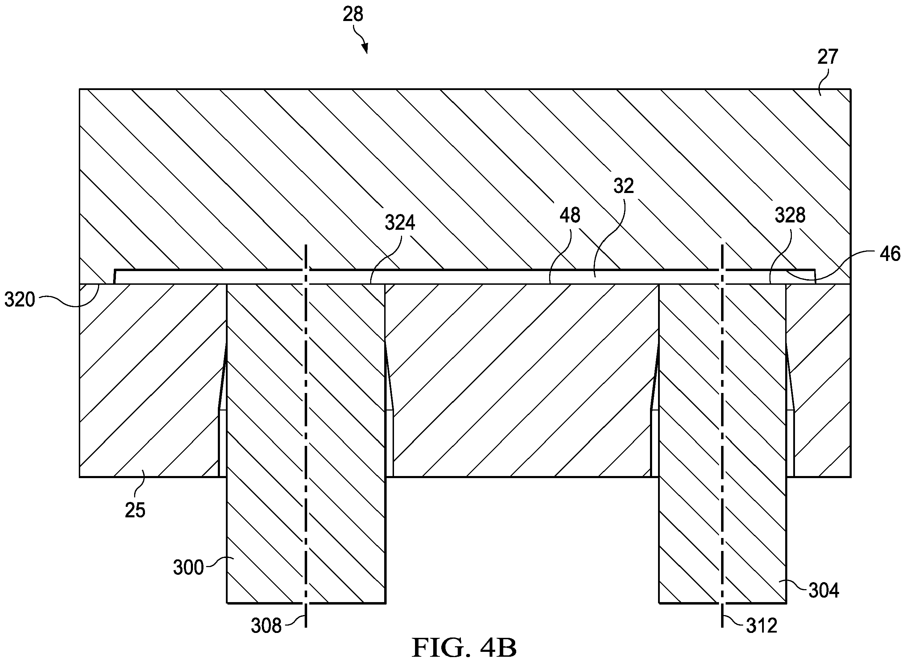

At the desired time (e.g., once the thermoplastic material 24 reaches a pre-determined percent cavity fill), the thermoplastic material 24 can be primarily coined by actuating the first side 25 and the elements 300 and 304 (at least in this example) from the position shown in FIG. 4A to the position shown in FIG. 4B. More specifically, the first side 25 and the elements 300 and 304 are advanced toward the second side 27 along the axes 300, 308, and 312, respectively, until the wall 320 of the first side 25 abuts or contacts a corresponding portion of the wall 48 of the second side 27. Doing so eliminates, or at least reduces, the gap 316 illustrated in FIG. 4A. Reducing the size of the mold cavity 32 in this manner coins, or compresses, the molten thermoplastic material 24 in the mold cavity 32, causing the material 24 to substantially fill the cavity 32.

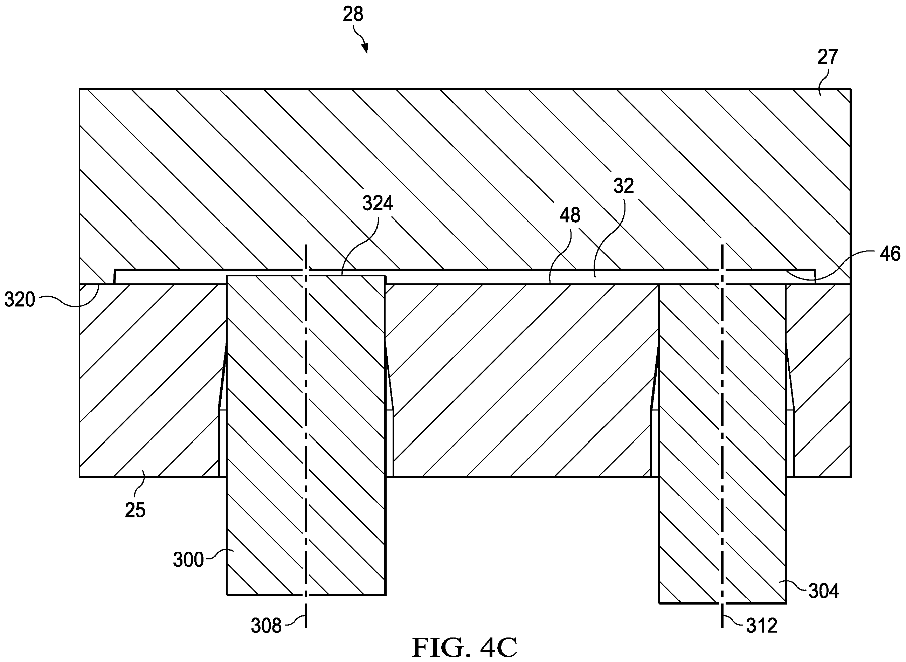

At a subsequent desired time (e.g., when the flow front of the material 24 has reached a first pre-determined location), the thermoplastic material 24 can be secondarily coined by actuating the element 104 from the position shown in FIG. 4B to the position shown in FIG. 4C. More specifically, the first element 300 is actuated, relative to the first side 25, further toward the second side 27 along the axis 308 until an end surface 324 of the element 300 reaches the desired position (e.g., contacts the flowing material 24 at the desired location). Actuation of the element 300 in this manner reduces the thickness of a first portion of the cavity 32, namely the portion between the wall 46 of the second side 27 and the end surface 324, while leaving unchanged the thickness of the remainder of the cavity 32. Secondarily coining the material 24 in the described manner coins, or compresses, molten thermoplastic material 24 adjacent or proximate to the end surface 324 of the element 104.

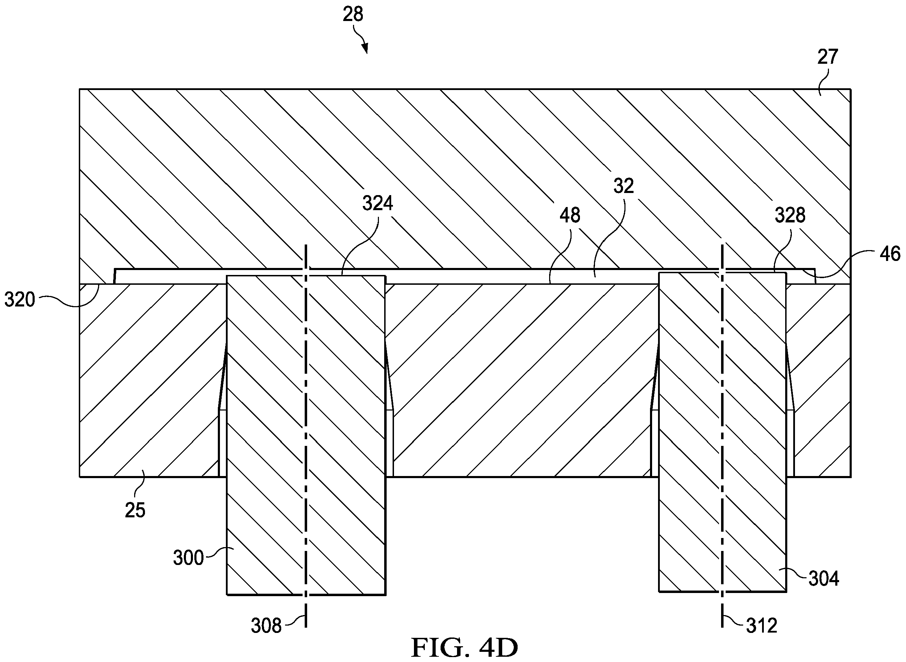

At a further subsequent desired time (e.g., when the flow front of the material 24 has reached a second pre-determined location), the thermoplastic material 24 can be tertiarily coined by actuating the second element 304 from the position shown in FIGS. 4B and 4C to the position shown in FIG. 4D. More specifically, the element 304 is actuated, relative to the first side 25, further toward the second side 27 along the axis 312 until an end surface 328 of the element 304 reaches the desired position (e.g., contacts the flowing material 24 at the desired location). In this example, the end surface 328 is positioned closer to the wall 46 than the end surface 324, though this need not happen (e.g., the surfaces 324, 328 can be aligned). Actuation of the element 304 in the described manner reduces the thickness of a second portion of the cavity 32, namely the portion between the wall 46 of the second side 27 and the end surface 328. As a result, the mold cavity 32 has a first thickness (e.g., 1 mm), a second thickness (e.g., .8 mm) smaller than the first thickness, and a third thickness (e.g., .6 mm) smaller than the first and second thicknesses, the first thickness corresponding to the thickness of the portion of the cavity 32 not located between the wall 46 and the end surfaces 324, 328, the second thickness corresponding to the thickness of the portion of the cavity 32 that is located between the wall 46 and the end surface 324, and the third thickness corresponding to the thickness of the portion of the cavity 32 that is located between the wall 46 and the end surface 328. It will be appreciated that the thickness of the first portion of the cavity 32 located between the wall 46 and the end surface 324 can be adjusted by moving the element 300 closer to or further from the wall 46 of the second side 27. Additionally or alternatively, it will be appreciated that the thickness of the second portion of the cavity 32 located between the wall 46 and the end surface 328 can be adjusted by moving the element 304 closer to or further from the wall 46 of the second side 27. In any event, tertiarily coining the material 24 in the described manner coins, or compresses, molten thermoplastic material 24 adjacent or proximate to the end surface 328 of the element 104.

The rate of actuation of the mold components used in the various methods of sequential coining described herein should preferably be controlled so as not to bleed molten thermoplastic material back into the nozzle or gate through which the thermoplastic material was introduced into the mold cavity 32, i.e. backflow of thermoplastic material should be avoided. The direction of motion of actuation relative to the direction of movement of the flow front can also be designed in a manner to minimize the likelihood of backflow of thermoplastic material.

It is particularly beneficial to employ the sequential coining techniques of the present disclosure to advance the flow front faster in certain regions of a given mold cavity. For instance, there may be a desire to form a relatively thin region of a part toward the end of fill, such as within the last 1%-10% of the mold cavity. Actuating one or more coining element(s) as the flow front reaches a location just upstream of the region to be formed thinner than the thicker region(s) of the part serves to increase the flow front velocity, since the un-frozen region of flowing thermoplastic material behind (i.e., upstream of) the flow front, upon reduction in thickness of the mold cavity 32, tends to propel the flow front faster toward the as-yet un-filled region of the mold cavity 32, even if that as-yet unfilled region is thinner. As described above, a sensor may be used to detect when the flow front has reached a predetermined position within the mold cavity, such as a location upstream of a region where a part of a molded product is to be formed relatively thinner than other regions of the part. Upon detecting that the flow front has reached the predetermined position, a controller can then trigger the coining element(s) to actuate.

While "sequential coining" has been described herein as being implemented to sequentially coin multiple sites within a given mold cavity, it will be appreciated that "sequential coining" can also be implemented to sequentially coin different sites across different mold cavities in the same mold. For instance, a first of the mold cavities in a multi-cavity mold may be provided with a first pair of movable elements, and a second of the mold cavities may be provided with a second pair of movable elements. At least one of the first or second elements of the first mold cavity may be configured or controlled to move to a different extent than a respective first or second element of the second mold cavity. This implementation of the various techniques disclosed herein may be used for a family mold with sequential coining in several mold cavities of the mold, but where the sequential coining occurs to a different extent in different cavities. Alternately, it could be employed to counter inter-cavity variations among multi-cavity molds making the same part. For instance, if during quality control it is detected that parts being molded in a single cavity or row of cavities in a given multi-cavity mold are experiencing defects that can be offset by coining to a different extent than other cavities of the multi-cavity mold in which parts are being molded without such defects, the degree of coining in just the defect-inducing cavities could be modified to counteract, in an effort to avoid, the defects.

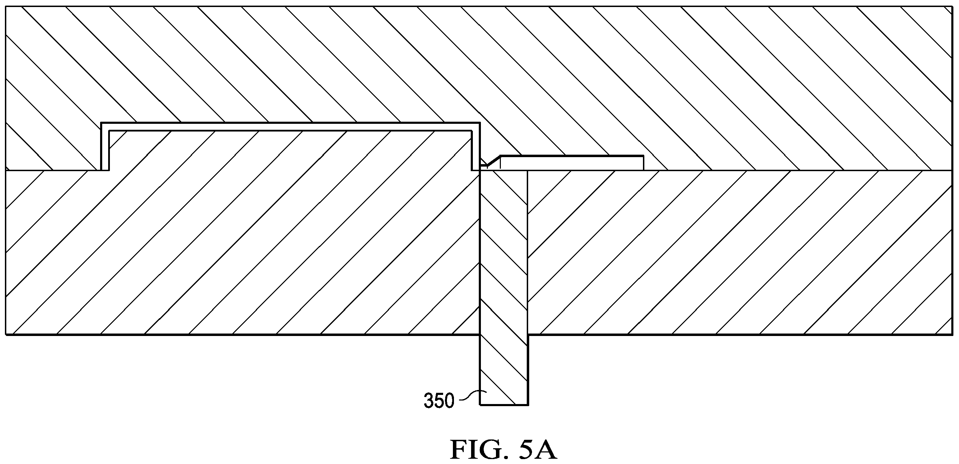

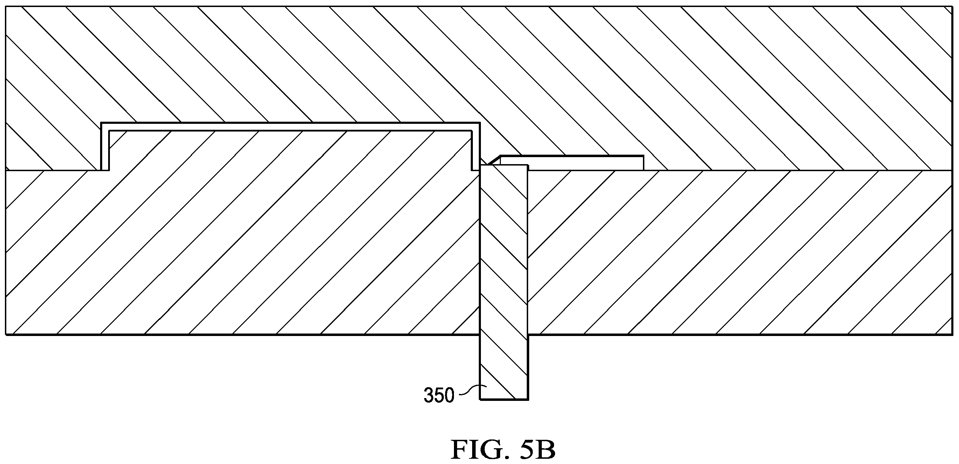

Turning to FIGS. 5A and 5B, the principles of the present disclosure can be applied not only to alter the flow rate of the flow front by minimizing the thickness of the mold cavity 32, but also, to move an actuatable gate 350 from a first position in fluid communication with the mold cavity to a second position no longer in fluid communication with the mold cavity. This may be particularly beneficial for mold cavities into which thermoplastic material is introduced from a plurality of different gates, but it is only desired to apply the thermoplastic material from certain of the gates for some duration of time shorter than the entire duration of fill. For example, when co-injecting different thermoplastic materials simultaneously into a single mold cavity, it may be desirable to introduce one of the thermoplastic materials only for a short interval of time relative to the entire duration of fill of a main thermoplastic material used to mold a given co-injected part. Instead of using a valve to open and close a given gate, the gate 350 could alternatively be actuated from a first position in fluid communication with the mold cavity (as illustrated in FIG. 5A) to a second position no longer in fluid communication with the mold cavity (as illustrated in FIG. 5B). This actuation of the gate 350 could be initiated as an independent operation, for example upon detection of the flow front reaching a predetermined location within the mold cavity. Instead or in addition, the actuation of the gate 350 could be coordinated with actuation of a sequential coining element of any of the various embodiments disclosed herein. In other words, the gate 350 may be directly or indirectly coupled to an actuatable coining element, such that upon actuation of the coining element, the gate 350 moves from a first position in fluid communication with the mold cavity to a second position no longer in fluid communication with the mold cavity.

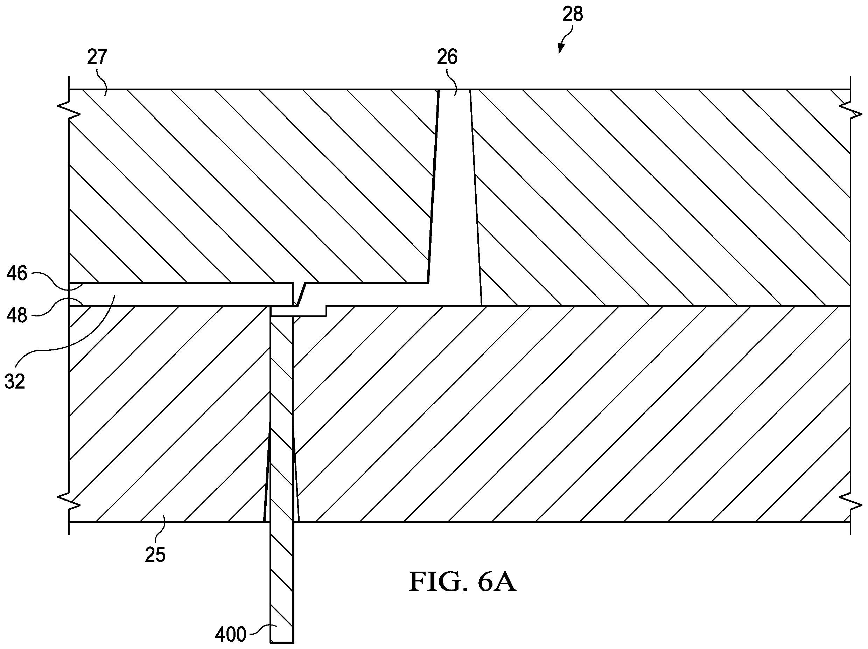

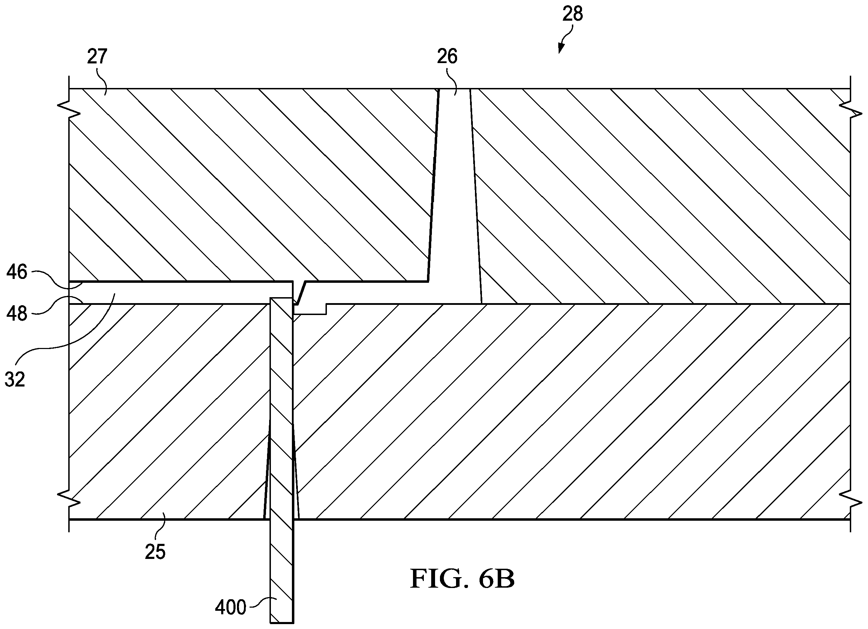

FIGS. 6A and 6B illustrate an example in which one of the coining elements in the mold 28 takes the form of an end gate 400 that is movable relative to the first and second sides 25, 27 and to the nozzle 26. In FIG. 6A, the end gate 400 is in a first position in which the gate 400 is fully retracted adjacent the first side 25 of the mold 28 such that the mold cavity 32 is in fluid communication with the nozzle 26. Accordingly, thermoplastic material can flow into, through, and fill, the mold cavity 32. At the desired time (e.g., once the thermoplastic material 24 reaches a pre-determined percent cavity fill), the end gate 400 can be actuated from the position shown in FIG. 6A to the position shown in FIG. 6B. More specifically, the end gate 400 can be actuated from a first position, in which the end gate 400 is retracted adjacent the first side 25 of the mold 28, toward the wall 48 of the second side 25 of the mold 28 and to a second position in which the end gate 400 is disposed between the mold cavity 32 and the nozzle 26, thereby blocking or severing fluid communication between the mold cavity 32 and the nozzle 26. At the same time, the end gate 400 coins, or compresses, the molten thermoplastic material 24 in the mold cavity 32, causing the material 24 to substantially fill the cavity 32. In other words, the gate 400 can simultaneously coin the material 24 and cut off fluid communication between the mold cavity 32 and the nozzle 26. While not illustrated herein, it will be appreciated that the gate 400 is only one coining element and can be used in combination with any of the coining elements described herein.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

While particular embodiments of the present invention have been illustrated and described, it would be obvious to those skilled in the art that various other changes and modifications can be made without departing from the scope of the invention. It is therefore intended to cover in the appended claims all such changes and modifications that are within the scope of this invention.

## Claims

1. A method of injection molding, comprising:
injecting a molten thermoplastic material (16) into a mold cavity (32) defined by a mold (28) of an injection molding system (10);
actuating, at a first point in time during the injecting, a first movable element (200) of the mold from a first position to a second position; and
wherein the method further comprises;
actuating, at a second point in time during the injecting, a second movable element (204) of the mold from a first position to a second position, the second movable element being distinct from the first movable element, and the second point in time being later than the first point in time ***characterized in that*** the injecting comprises maintaining a melt pressure of the shot of the molten thermoplastic material at a substantially constant pressure during filling of substantially the entire mold cavity, and wherein the injecting comprises maintaining a melt pressure of the shot of the molten thermoplastic material at a pressure of 41.37 MPa (6,000 psi) or less during filling of substantially the entire mold cavity.

2. The method of claim 1, wherein actuating the first movable element from the first position to the second position comprises moving the first movable element toward an opposing wall of the mold, and wherein in the second position the first movable element is spaced from the opposing wall of the mold.

3. The method of claim 1, further comprising determining a position of a flow front of the molten thermoplastic material based on at least one of time, a position of the screw of the injection molding system, a melt pressure, and a hydraulic pressure, at least one of the first point in time and the second point in time being based on the determined position.

4. The method of claim 3, wherein the determining comprises obtaining, using a sensor, during the injecting, data associated with the molten thermoplastic material flowing at a first pre-determined location of the mold cavity.

5. The method of claim 4, wherein the obtaining comprises detecting at least one of a presence of a flow front of the molten thermoplastic material, a temperature, a melt pressure, or a flow rate of the molten thermoplastic material flowing at the first pre-determined location.

6. The method of any one of claims 3 to 5, wherein the determining comprises obtaining, using a sensor, during the injecting, data associated with the molten thermoplastic material flowing at a second predetermined location of the mold cavity.

7. The method of claim 6, wherein the obtaining data associated with the molten thermoplastic material flowing at a second predetermined location of the mold cavity comprises at least one of detecting a presence of the flow front of the molten thermoplastic material, a temperature, a melt pressure, or a flow rate of the molten thermoplastic material flowing at the second pre-determined location.

8. The method of any one of claims 1 to 7, wherein injecting comprises injecting the molten thermoplastic material into the mold cavity via a gate.

9. The method of claim 8, wherein actuating the first movable element or actuating the second movable element comprises moving the gate out of fluid communication with the mold cavity.

10. The method of claim 8, wherein actuating the first movable element or actuating the second movable element causes the gate to move out of fluid communication with the mold cavity.

11. The method of any one of claims 1 to 10, further comprising actuating, at a third point in time during the injecting, at least one of (a) the first movable element from the second position to a third position, (b) the second movable element from the second position to a third position, and (c) a third movable element of the mold from a first position to a second position.

12. The method of claim 11, wherein actuating at the third point in time during the injecting comprises actuating the first movable element from the second position to the third position, the third point in time being after the first point in time and one of before the second point in time, after the second point in time, and while the second movable element is actuated.

13. The method of claim 11, wherein actuating at the third point in time during the injecting comprises actuating the third movable element from the first position to the second position, and wherein the third point in time occurs one of before the first point in time, after the first point in time, or while the first movable element is actuated.

## Patentansprüche

1. Spritzgussverfahren, das umfasst:
Spritzen eines geschmolzenen thermoplastischen Materials (16) in einen Gussformhohlraum (32), der durch eine Gussform (28) eines Spritzgusssystems (10) definiert ist;
Betätigen eines ersten beweglichen Elements (200) der Gussform zu einem ersten Zeitpunkt während des Spritzens aus einer ersten Position in eine zweite Position; und
wobei das Verfahren ferner umfasst:
Betätigen eines zweiten beweglichen Elements (204) der Gussform zu einem zweiten Zeitpunkt während des Spritzens aus einer ersten Position in eine zweite Position, wobei sich das zweite bewegliche Element von dem ersten beweglichen Element unterscheidet und wobei der zweite Zeitpunkt später als der erste Zeitpunkt ist, ***dadurch gekennzeichnet, dass*** das Spritzen das Halten eines Schmelzdrucks des Schusses des geschmolzenen thermoplastischen Materials auf einem im Wesentlichen konstanten Druck während eines Füllens im Wesentlichen des gesamten Gussformhohlraums umfasst und wobei das Spritzen das Halten eines Schmelzdrucks des Schusses des geschmolzenen thermoplastischen Materials auf einem Druck von 41,37 MPa (6000 psi) oder weniger während eines Füllens im Wesentlichen des gesamten Gussformhohlraums umfasst.

2. Verfahren nach Anspruch 1, wobei das Betätigen des ersten beweglichen Elements aus der ersten Position in die zweite Position das Bewegen des ersten beweglichen Elements hin zu einer gegenüberliegenden Wand der Gussform umfasst und wobei das erste bewegliche Element in der zweiten Position von der gegenüberliegenden Wand der Gussform beabstandet ist.

3. Verfahren nach Anspruch 1, das ferner das Bestimmen einer Position einer ersten Fließfront des geschmolzenen thermoplastischen Materials auf Basis zumindest von einem von Zeit, einer Position der Schnecke des Spritzgusssystems, einem Schmelzdruck und einem Hydraulikdruck umfasst, wobei zumindest eines des ersten Zeitpunkts und des zweiten Zeitpunkts auf der bestimmten Position basiert.

4. Verfahren nach Anspruch 3, wobei das Bestimmen das Erhalten von Daten unter Verwendung eines Sensors während des Spritzens umfasst, die mit dem geschmolzenen thermoplastischen Material assoziiert ist, das an einer ersten vorbestimmten Stelle des Gussformhohlraums fließt.

5. Verfahren nach Anspruch 4, wobei das Erhalten das Erkennen von zumindest einem eines Vorhandenseins einer Fließfront des geschmolzenen thermoplastischen Materials, einer Temperatur, eines Schmelzdrucks oder einer Fließrate des geschmolzenen thermoplastischen Materials, das an der ersten vorbestimmten Stelle fließt, umfasst.

6. Verfahren nach einem der Ansprüche 3 bis 5, wobei das Bestimmen das Erhalten von Daten unter Verwendung eines Sensors während des Spritzens umfasst, die mit dem geschmolzenen thermoplastischen Material assoziiert sind, das an einer zweiten vorbestimmten Stelle des Gussformhohlraums fließt.

7. Verfahren nach Anspruch 6, wobei das Erhalten von Daten, die mit dem geschmolzenen thermoplastischen Material assoziiert sind, das an einer zweiten vorbestimmten Stelle des Gussformhohlraums fließt, zumindest eines von Erkennen eines Vorhandenseins der Fließfront des geschmolzenen thermoplastischen Materials, einer Temperatur, eines Schmelzdrucks oder einer Fließrate des geschmolzenen thermoplastischen Materials, das an der zweiten vorbestimmten Stelle fließt, umfasst.

8. Verfahren nach einem der Ansprüche 1 bis 7, wobei das Spritzen das Spritzen des geschmolzenen thermoplastischen Materials in den Gussformhohlraum über einen Anschnitt umfasst.

9. Verfahren nach Anspruch 8, wobei das Betätigen des ersten beweglichen Elements oder das Betätigen des zweiten beweglichen Elements das Bewegen des Anschnitts aus einer Fluidverbindung mit dem Gussformhohlraum umfasst.

10. Verfahren nach Anspruch 8, wobei das Betätigen des ersten beweglichen Elements oder das Betätigen des zweiten beweglichen Elements bewirkt, dass sich der Anschnitt aus einer Fluidverbindung mit dem Formgusshohlraum bewegt.

11. Verfahren nach einem der Ansprüche 1 bis 10, das ferner das Betätigen zumindest eines von (a) dem ersten beweglichen Element aus der zweiten Position in eine dritte Position, (b) dem zweiten beweglichen Element aus der zweiten Position in eine dritte Position und (c) einem dritten beweglichen Element der Gussform aus einer ersten Position in eine zweite Position zu einem dritten Zeitpunkt während des Spritzens umfasst.

12. Verfahren nach Anspruch 11, wobei das Betätigen zu dem dritten Zeitpunkt während des Spritzens das Betätigen des ersten beweglichen Elements aus der zweiten Position in die dritte Position umfasst, wobei der dritte Zeitpunkt nach dem ersten Zeitpunkt liegt und entweder vor dem zweiten Zeitpunkt, nach dem zweiten Zeitpunkt oder während der Betätigung des zweiten beweglichen Elements ist.

13. Verfahren nach Anspruch 11, wobei das Betätigen zum dritten Zeitpunkt während des Spritzens das Betätigen des dritten beweglichen Elements aus der ersten Position in die zweite Position umfasst und wobei der dritte Zeitpunkt entweder vor dem ersten Zeitpunkt, nach dem ersten Zeitpunkt oder während der Betätigung des ersten beweglichen Elements ist.

## Revendications

1. Procédé de moulage par injection, comprenant :
injecter un matériau thermoplastique fondu (16) dans une cavité de moule (32) définie par un moule (28) d'un système de moulage par injection (10);
actionner, à un premier moment pendant l'injection, un premier élément mobile (200) du moule d'une première position à une deuxième position ; et
le procédé comprenant en outre :
actionner, à un deuxième moment pendant l'injection, un deuxième élément mobile (204) du moule d'une première position à une deuxième position, le deuxième élément mobile étant distinct du premier élément mobile, et le deuxième moment étant postérieur au premier moment, **caractérisé par le fait que** l'injection comprend maintenir une pression de fonte de la charge d'injection du matériau thermoplastique fondu à une pression sensiblement constante pendant le remplissage de sensiblement toute la cavité de moule, et l'injection comprend maintenir une pression de fonte de la charge d'injection du matériau thermoplastique fondu à une pression de 41,37 MPa (6000 psi) ou moins pendant le remplissage de sensiblement toute la cavité de moule.

2. Procédé selon la revendication 1, dans lequel actionner le premier élément mobile de la première position à la deuxième position comprend déplacer le premier élément mobile vers une paroi opposée du moule et, dans la deuxième position, le premier élément mobile est espacé de la paroi opposée du moule.

3. Procédé selon la revendication 1, comprenant en outre déterminer une position d'un front d'écoulement du matériau thermoplastique fondu sur la base d'au moins un parmi le temps, une position de la vis du système de moulage par injection, une pression de fonte et une pression hydraulique, au moins un parmi le premier moment et le deuxième moment étant basé sur la position déterminée.

4. Procédé selon la revendication 3, dans lequel la détermination comprend obtenir, à l'aide d'un capteur, pendant l'injection, des données associées au matériau thermoplastique fondu s'écoulant à un premier emplacement prédéterminé de la cavité de moule.

5. Procédé selon la revendication 4, dans lequel l'obtention comprend détecter au moins un parmi la présence d'un front d'écoulement du matériau thermoplastique fondu, une température, une pression de fonte ou un débit du matériau thermoplastique fondu s'écoulant au premier emplacement prédéterminé.

6. Procédé selon l'une quelconque des revendications 3 à 5, dans lequel la détermination comprend obtenir, à l'aide d'un capteur, pendant l'injection, des données associées au matériau thermoplastique fondu s'écoulant à un second emplacement prédéterminé de la cavité de moule.

7. Procédé selon la revendication 6, dans lequel l'obtention de données associées au matériau thermoplastique fondu s'écoulant à un second emplacement prédéterminé de la cavité de moule comprend au moins un élément parmi la détection de la présence de la partie avant d'écoulement du matériau thermoplastique fondu, une température, une pression de fonte ou un débit du matériau thermoplastique fondu s'écoulant au second emplacement prédéterminé.

8. Procédé selon l'une quelconque des revendications 1 à 7, dans lequel l'injection comprend injecter le matériau thermoplastique fondu dans la cavité de moule par l'intermédiaire d'une entrée.

9. Procédé selon la revendication 8, dans lequel actionner le premier élément mobile ou actionner le deuxième élément mobile comprend déplacer l'entrée hors de communication fluidique avec la cavité de moule.

10. Procédé selon la revendication 8, dans lequel actionner le premier élément mobile ou actionner le deuxième élément mobile amène l'entrée à se déplacer hors de communication fluidique avec la cavité de moule.

11. Procédé selon l'une quelconque des revendications 1 à 10, comprenant en outre actionner, à un troisième moment pendant l'injection, au moins un parmi (a) le premier élément mobile de la deuxième position à une troisième position, (b) le deuxième élément mobile de la deuxième position à une troisième position, et (c) un troisième élément mobile du moule d'une première position à une deuxième position.

12. Procédé selon la revendication 11, dans lequel l'actionnement au troisième moment pendant l'injection comprend actionner le premier élément mobile de la deuxième position à la troisième position, le troisième moment étant postérieur au premier moment et l'un parmi avant le deuxième moment, après le deuxième moment et pendant que le deuxième élément mobile est actionné.

13. Procédé selon la revendication 11, dans lequel l'actionnement au troisième moment pendant l'injection comprend actionner le troisième élément mobile de la première position à la deuxième position, et le troisième moment se produit l'un parmi avant le premier moment, après le premier moment ou pendant que le premier élément mobile est actionné.
